Europäisches Patentamt

**European Patent Office**

Office européen des brevets

(11) Publication number: **0 094 569**
**A1**

(12) **EUROPEAN PATENT APPLICATION**

(21) Application number: **83104443.3**

(22) Date of filing: **05.05.83**

(51) Int. Cl.³: **B 60 R 7/06**
**E 05 D 7/10**

(30) Priority: **17.05.82 JP 81651/82**

(43) Date of publication of application:
**23.11.83 Bulletin 83/47**

(84) Designated Contracting States:
**DE FR GB**

(71) Applicant: **NISSAN MOTOR COMPANY, LIMITED**
No.2, Takara-cho, Kanagawa-ku
Yokohama-shi Kanagawa-ken 221(JP)

(72) Inventor: **Matsuno, Yoshio**
2960, Asamizodai
Sagamihara-shi Kanagawa-ken(JP)

(74) Representative: **Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)**

(54) **Hinge pin of a glove box lid for vehicle.**

(57) A hinge pin (P2) of a glove box lid constructing the glove box of a vehicle which requires a minimal number of parts. The hinge pin comprises a long axle (12), a short axle (13) which is coaxial with said long axle, a brim (14) formed between said long (12) and short axles (13), and a spring portion (15) extending axially outwardly from the end of the long axle (12) furthest away from said brim (14). The above four member of the hinge pin are contructed integrally.

FIG. 4

EP 0 094 569 A1

TITLE OF THE INVENTION

HINGE PIN OF A GLOVE BOX LID FOR VEHICLE

BACKGROUND OF THE INVENTION

This invention relates to a hinge pin of a glove box lid for a vehicle.

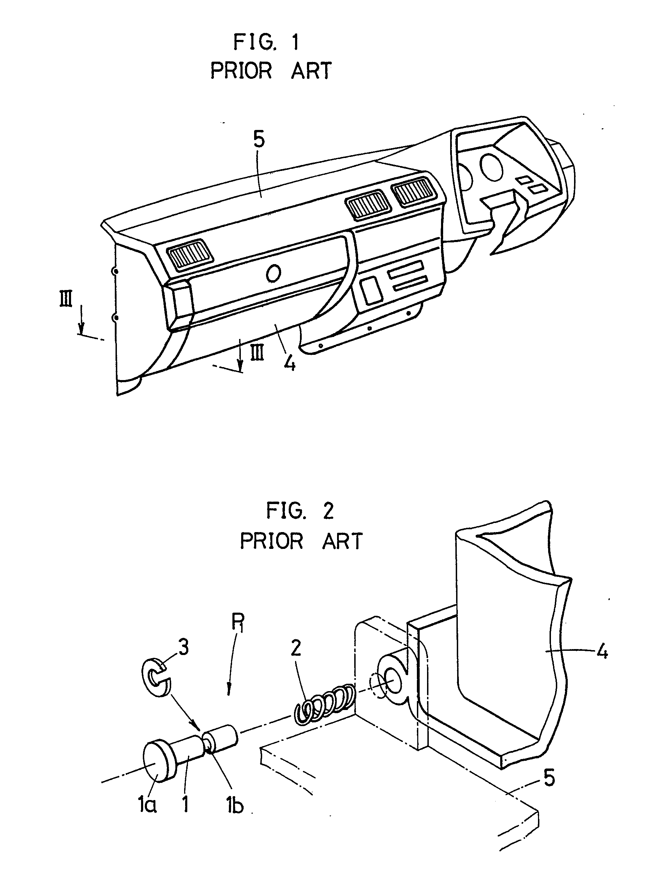

Conventionally, as, for example, has been adapted in Nissan (Datsun) sunny B31, there is known in the art a hinge pin of the type such as shown in Fgs. 1 to 3. As shown in Fig. 2, a conventional hinge pin $P_1$ consists of a pin body 1, a spring 2, and a snap ring 3. The pin body comprises a shaft having a head 1a formed at one end thereof and annular an engaging groove 1b formed an intermediate position thereof and adapted to come into engagement with the snap ring 3.

With such a construction, a glove box lid 4 is mounted on an instrument panel 5 using the hinge pin P1 in accordance with the following five steps:

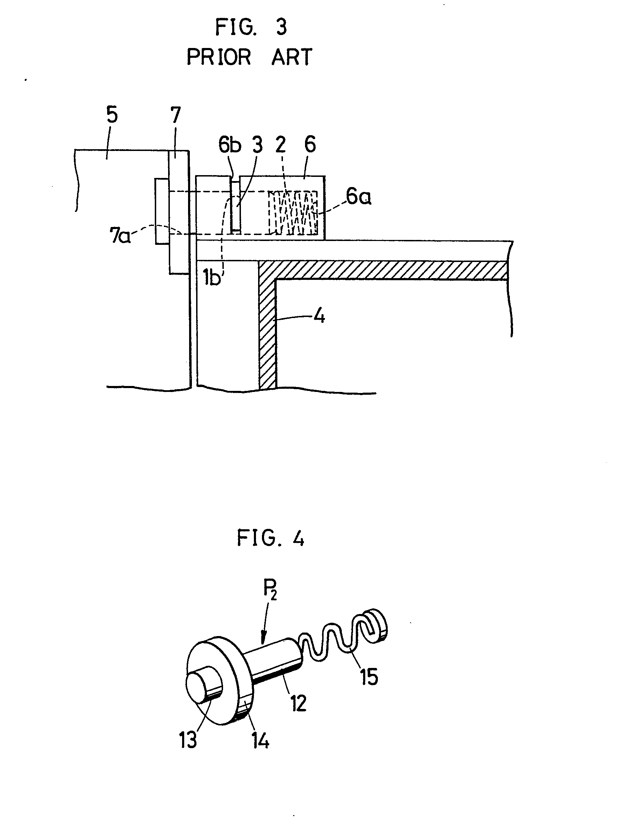

Referring to Figs. 2 and 3 (the schematic drawing for the right side is omitted since it is symmertrical in the horizontal direction with the left side), (1) insert the spring 2 into a hole 6a formed in a pin receiving portion 6 which intern is formed at the bottom and in the back wall of the glove box lid 4; (2) align the hole 6a and a hole 7a formed in a pin receiving member 7 which intern is formed on an instrument panel 5 of the vihicle, (3) insert the pin body 1 into the hole 6a via the hole 7a so that the pin body 1 compresses the spring 2; (4) push the pin body 1 toward the hole 6a so that the engaging groove 1b is positioned at an engaging slit 6b formed in the pin receiving member 6; and (5) insert the snap ring 3 to the aligned engaging groove 1b and the engaging slit 6b.

However, such a prior-art hinge pin $P_1$ comprises the three parts, namely the pin body 1, the spring 2, and the snap ring 3. Therefore, it takes five steps, as described above, to mount the glove box lid 4, and, accordingly, it is troublesome and time consuming to assemble as well as requiring a lot of service work. Furthermore, since the pin body 1 must be attached from the back side of the instrument panl 5 as is obvious from the procedure of attaching the hinge pin $P_1$, it further reduce the assembly and mounting efficiency. Still further, increases the production cost thereof.

## SUMMARY OF THE INVENTION

An object of the present invention is to provide a hinge pin of a glove box lid for a vehicle, wherein the glove box lid can be simplified in construction and easily mounted to the instrument panel, thereby improving the mounting efficiency.

Another object of the invention is to provide a hinge pin of a glove box lid for a vehicle, which can be mounted from the front side of the instrument panel, thereby further improving the mounting efficiency.

A further object of the invention is to provide a hinge pin of a glove box lid for a vehicle, which requires fewer parts thereby minimizing the production costs thereof.

Brifly described, these and other objects and advantages of, the present invention are accomplished by the provision of a hinge pin of a glove box lid for a vehicle, comprising: a short axle; a long axle which is coaxial with said long axle; a brim formed between said long and short axles; and a spring portion extending axially from the end of said long axle furthest from and in the direction opposite to said brim, wherein all of the above-mentioned component parts are integrally formed with resin.

These and other obhjects, features and advantages of the present invention will be more apparent from the following description of a preferred embodiment, taken in conjunction with the accompanying drawing.

## BRIEF DESCRIPTION OF THE DRAWINGS

Fig. 1 is a perspective view of an instrument panel on which a glove box lid has been mounted;

Fig. 2 is an exploded perspective view illustrating a conventional hinge pin and principal protion of a glove box lid for a vehicle of Fig. 1.

Fig. 3 is a cross sectional view taken along the line III-III of Fig. 1;

Fig. 4 is a perspective view of a hinge pin of a glove box lid for a vehicle according to the present invention;

Fig. 5 shows a schematic plan view of the principal portion of a glove box lid corresponding to FIG. 3 for describing the state where the glove box lid has been mounted to the instrument panel using the hinge pin of the present invention; and

Fig. 6 is a schematic plan view for describing the procedure of mounting the glove box lid on the instrument panel.

DETAILED DESCRIPTION OF A PREFERRED EMBODIMENT

Referring to Fig. 4 to 6, a hinge pin $P_2$ of a glove box lid for a vehicle according to the present invention comprises: along axle 12; a short axle 13 which is coaxial with the long axle 12; a brim 14 formed between the long axle 12 and the short axle 13; and a spring portion 15 extending axially and outwardly from the end of the long axle 12 furthest from and in the direction opposite to the brim 14; wherein all of these component parts are integrally formed with resin.

The long axle 12 is inserted from the spring portion 15 at the head of the axle 12 into a hole 9a which is closed at its inner end and which is formed in a first pin receiving member 9 which, intern, is formed at the bottom part of a glove box lid 8. The short axle 13 is inserted into a hole 11a formed in a second pin receiving member 11 which is formed in an instrument panel 10.

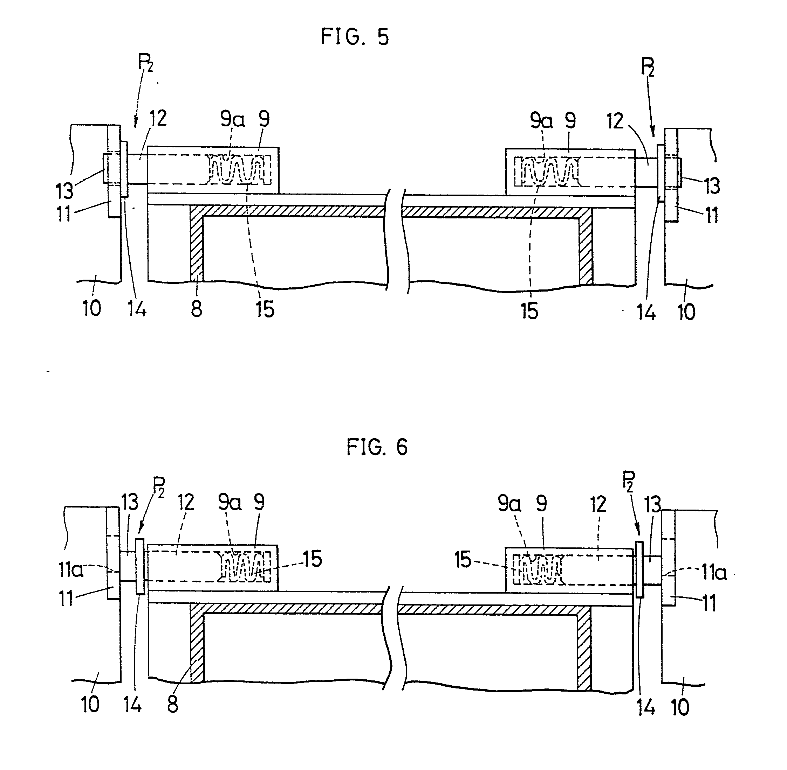

As shown in Fig. 5, the long axle 12 is inserted into the hole 9a having one end closed while compressing the spring portion 15; thus, the spring member 15 always pushes the hinge pin $P_2$ outwardly from the hole 9a.

The brim 14 serves as a stopper to prevent the hinge pin $P_2$ which has been inserted into the hole 9a from leaping out of the hole due to the sping force of the compressed spring poriton 15 by pressing the hinge pin $P_2$ against the second pin receiving member 11. Therefore, this brim 14 has the same function as the conventional snap ring 3 for preventing the hinge pin $P_1$ from leaping out of the hole 6a by engaging the engaging slit 6b of the pin receiving member 6 and the engaging grove 1b of the pin body 1 as shown in Fig. 3.

To mount the glove box lid 8 on the instrument panel 10 using hinge pins $P_2$, insert the spring members 15 and the long axles 12 of respective hinge pins P2 into the holes 9a of the first pin receiving members 9. Then grip the glove box lid 8, push the hinge pins $P_2$ into the holes 9a and while pressing the brims 14 using your fingers, insert the glove box lid 8 into the instrument panel 10 from the lower portion of the front side. The short axles 13 of the hinge pins $P_2$ are brought into respective contact with each of the right and left second pin receiving members 11 as shown in Fig. 6. The short axles 13 are then slid upward untill they respectively align with the respective holes 11a, and thereafter, are released to allow the spring portions 15 of the respective pins $P_2$ to force their respective short axiles into the respective holes 11a of the second pin receiving members 11. Thereby causing the short axle 13 to be inserted into the hole 11a. At the same time, the brim 14 comes into contact with te second pin receiving member 11, thereby preventing the hinge pin $P_2$ from completely coming out of the pin receiving portion 9.

According to one form of a preferred embodiment of the present invention, the spring member has a wave-like shape and the brim has a circular disk shape.

Although a preferred embodiment of the invention is specifically illustrate and described herein, it will be appreciated that many modifications and variations of the present invention are possible in light of the above teachings and within the purview of the appended claims without departing from the spirit and intended scope of the invention.

WHAT IS CLAIMED IS:

1.    A hinge pin of a glove box lid for a vehicle, comprising: a long axle; a short axle which is coaxial with said long axial a brim formed between said long and short axle; and a spring portion extending axially outwardly from the end of said long axle; wherein all of said component parts are integrally formed.

2.    The hinge of a glove box lid for a vehicle as claimed in claim 1, wherein said spring member has a wave-like shape.

3.    The hinge pin of a glove box lid for a vehicle as clamed in claim 1 or 2, wherein said brim has a circular disk shape.

4.    The hinge pin of a glove box lid for vehicle as claimed in claim 1, 2, or 3, wherein said hinge pin is formed in a body with resin.

FIG. 1
PRIOR ART

FIG. 2
PRIOR ART

FIG. 3
PRIOR ART

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | CH-A- 585 840 (ESCHMANN) <br> * Subclaims 2,6; figures 1,2 * | 1,2,4 | B 60 R 7/06 <br> E 05 D 7/10 |
| | --- | | |
| A | FR-A-2 341 027 (LA RADIOTECHNIQUE) | | |
| | ----- | | |

|  |
|---|
| TECHNICAL FIELDS SEARCHED (Int. Cl. ³) |
| B 60 R <br> E 05 D |

The present search report has been drawn up for all claims

| Place of search <br> THE HAGUE | Date of completion of the search <br> 24-06-1983 | Examiner <br> SCHMITTER J.M. |
|---|---|---|